Europäisches Patentamt

European Patent Office

Office européen des brevets

(11) Numéro de publication: **0 171 329**
A1

(12) **DEMANDE DE BREVET EUROPEEN**

(21) Numéro de dépôt: **85401546.8**

(22) Date de dépôt: **29.07.85**

(51) Int. Cl.⁴: **F 01 D 9/04,** F 01 D 5/14

(30) Priorité: **08.08.84 FR 8412514**

(43) Date de publication de la demande: **12.02.86**
**Bulletin 86/7**

(84) Etats contractants désignés: **DE FR GB**

(71) Demandeur: **RATIER-FIGEAC, Société dite:,**
**F-46100 Figeac (FR)**

(72) Inventeur: **Cuny, Jean-Jacques, 4, rue Lucien Roques,**
**F-46100 Figeac (FR)**

(74) Mandataire: **Loriot, Jacques et al, c/o SA.**
**FEDIT-LORIOT 38, avenue Hoche, F-75008 Paris (FR)**

(54) **Aube fixe pour réacteurs.**

(57)    Aube fixe en matériau composite à base de fibres de carbone dont l'extrémité supérieure (18) est fixée par collage dans une plate-forme (12) de fixation de l'aube dans le carter (6) du réacteur.

L'extrémité supérieure (18) de l'aube (10) est en forme de coin qui s'engage dans une fente (16') en forme de coin complémentaire ménagée dans la plate-forme (12), l'assemblage étant complété par un collage des deux pièces.

En cas de décollement entre les deux pièces, l'assemblage en forme de coin empêche l'aube (10) de s'échapper de la plate-forme (12) et d'être entraînée dans la veine de gaz.

## Aube fixe pour réacteurs.

La présente invention concerne les aubages fixes dirigeant les flux de gaz dans les compresseurs ou turbines des réacteurs, tels que les réacteurs pour avions.

Jusqu'à présent ces aubes fixes étaient des pièces métalliques monobloc comportant une partie principale ou corps constituant la surface de guidage des gaz avec, à chaque extrémité, une plateforme transversale en saillie, la plateforme extérieure constituant l'élément de fixation (au moyen de boulons) de chaque aube fixe à l'intérieur du carter extérieur cylindrique du réacteur.

Pour alléger ces aubes, on a tenté de les réaliser en matériau composite. Dans ce cas les aubes sont faites en trois parties distinctes, assemblées par collage. La première partie constitue le corps de l'aube et est faite en matériau composite renforcé à base de fibres de carbone. Les deux autres parties constituent les plateformes d'extrémité et sont faites en matière plastique moulée. Chaque plateforme présente une fente dans laquelle est enfoncée et collée chacune des extrémités de l'aube. Il a été ainsi possible de diminuer le poids des aubes d'environ 45 % par rapport à des aubes métalliques monobloc.

Cependant, il existe un risque que le corps principal se désolidarise, en cas de décollage, d'avec la plateforme extérieure de fixation et soit entraîné dans la veine d'air en causant des dégâts graves.

L'invention a pour but de remédier à cet inconvénient tout en conservant les avantages, notamment la légèreté, des aubes composites en plusieurs parties.

L'invention a pour objet une aube radiale fixe pour réacteurs qui comprend : un corps principal en matériau composite ; une plateforme extérieure, en matière plastique moulée, de fixation de l'aube sur le carter du réacteur, ladite plateforme présentant une fente dans laquelle est enfoncée et collée l'extrémité extérieure du corps principal pour solidariser ladite plateforme avec ledit corps principal ; et une plateforme intérieure de raidissage de l'aube , en matière moulée, présentant une fente dans laquelle est enfoncée et collée l'extrémité intérieure libre du corps principal, ladite aube étant caractérisée en ce que l'extrémité extérieure du corps principal présente, en section transversale, une forme de coin, la partie la plus épaisse dudit coin étant située au bord extrême dudit corps principal ; et en ce que ladite fente de la plateforme extérieure présente une forme complémentaire de coin.

Grâce à l'invention, le corps principal est bloqué par effet de coin dans la plateforme extérieure de fixation, sans pouvoir s'en échapper en direction radiale vers l'intérieur en cas de décollage de ces deux parties.

L'extrémité extérieure du corps principal de l'aube peut être en forme de simple coin ou de double coin.

L'invention sera mieux comprise à la lecture de la description détaillée qui va suivre et à l'examen des dessins annexés qui représentent, à titre d'exemples non limitatifs plusieurs modes de réalisation de l'invention.

La figure 1 est une vue en plan d'une aube métallique monobloc connue.

La figure 2 est une vue en plan d'une aube composite en trois parties.

La figure 3 est une vue partielle en coupe, suivant le plan A-A de la figure 2, illustrant le mode de fixation connu, par collage seul, du corps principal de l'aube dans la plateforme extérieure de fixation de l'aube sur le carter du réacteur.

La figure 4 est une vue partielle en coupe, suivant le plan A-A de la figure 2, du mode d'assemblage selon l'invention du corps de l'aube dans la plateforme extérieure.

La figure 5 est une variante de réalisation de l'invention.

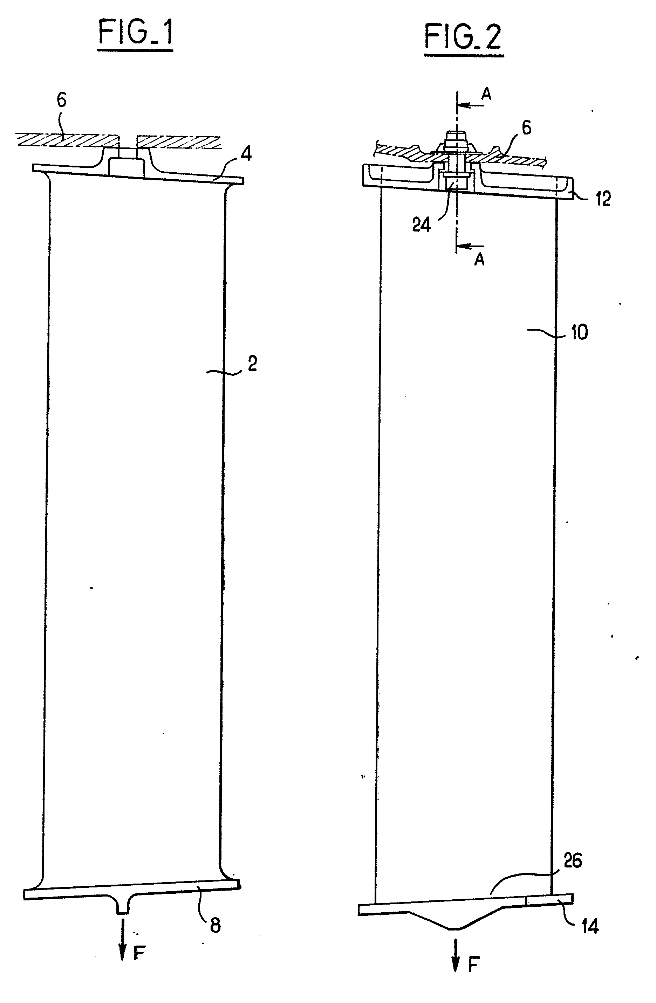

On a représenté pour mémoire sur la figure 1 une aube radiale métallique connue, réalisée sous forme monobloc, qui comprend le corps principal 2 de l'aube, une plateforme extérieure transversale 4 de fixation de l'aube sur le carter extérieur 6 du réacteur et une plateforme intérieure de raidissage 8. La direction de l'axe du rotor est indiquée par la flèche F.

L'aube composite représentée sur la figure 2 est de configuration identique à l'aube métallique de la figure 1, mais elle est composée de trois parties distinctes assemblées par collage : la partie principale au corps de l'aube 10, la plateforme de fixation extérieure 12 et la plateforme intérieure 14.

Le corps principal 10 est fait au moyen d'un tissu à base de fibres de carbone, renforcé de fibres polyamides de grande résistance telles que celles vendues sous le nom de "Kevlar" et imprégné de résine polymérisée.

Les plateformes 12 et 14 sont faites en matière plastique moulée telle qu'une résine polyamide ("Nylon" ou "Torlon" par exemple) injectée.

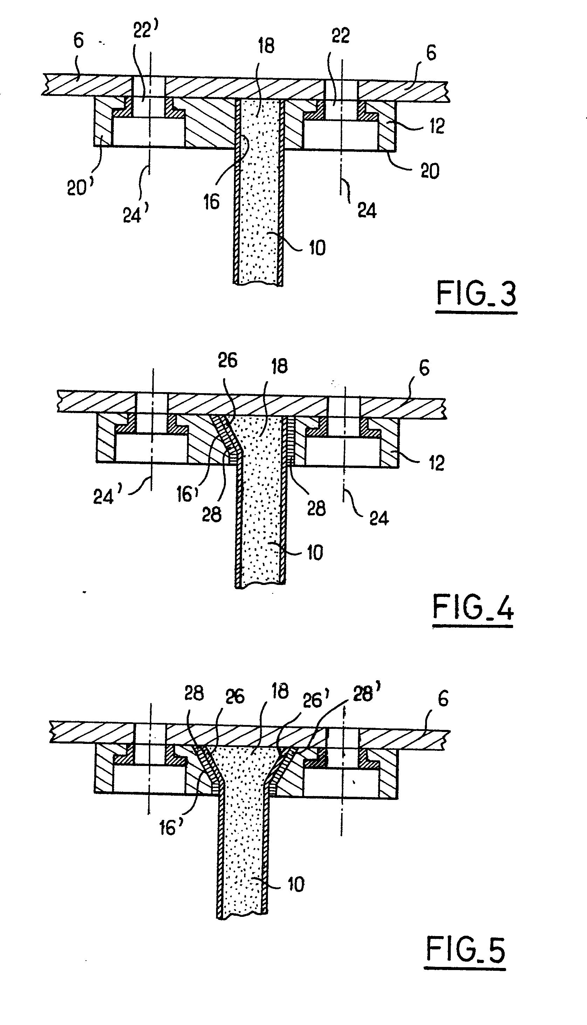

Suivant le mode de réalisation connu d'une aube composite représentée sur la figure 3, la plateforme extérieure 12 présente une fente 16 dans laquelle est engagée et collée l'extrémité extérieure 18 du corps 10 de l'aube. La plateforme 12 présente deux oreilles latérales 20, 20' percées de trous 22, 22' dans lesquels se montent des boulons de fixation 24, 24' de la plateforme sur le carter 6 du réacteur (voir également figure 2).

La plateforme intérieure 14, tournée vers l'axe du rotor et qui ne contribue pas à la fixation de l'aube, présente également une fente dans laquelle s'engage et est collée l'extrémité intérieure 26 du corps principal 10.

Dans le mode d'assemblage connu représenté sur la figure 3, les aubes en matériau composite assemblées seulement par collage peuvent se désolidariser en cas de décollage de la partie principale 10 d'avec la plateforme extérieure 12 et partir dans le flux de la veine d'air, car rien n'empêche l'aube de descendre vers l'axe du rotor (flèche F', figure 3) et, par conséquent de sortir de la fente 16 et de s'échapper de la plateforme extérieure 12, alors que c'est la liaison par les boulons 24, 24', entre la plateforme 12 et le carter 6, qui rend normalement l'aube solidaire du carter extérieur 6.

Dans le mode de réalisation de l'invention représenté sur la figure 4, on donne à l'extrémité 18 du corps principal 10 qui s'engage dans la fente centrale de la plateforme extérieure 12 une surépaisseur en forme de coin 26, ce qui est facile à réaliser au moment du moulage du corps principal de l'aube.

De même, on donne à la fente centrale 16' de la plateforme extérieure 12 une forme complémentaire en forme de coin. Les deux pièces sont assemblées par collage, puis la plateforme 12 est fixée normalement au carter 6 par les boulons 24, 24'.

On voit donc bien que, même en cas de décollement total entre les deux pièces, le corps principal 10 de l'aube ne peut s'échapper de la fente de la plateforme 12 et ne peut donc être entraîné dans le flux de la veine d'air.

D'autre part, la sécurité n'étant plus assurée uniquement par le collage, on peut interposer entre l'extrémité 18 du corps de l'aube et la plateforme extérieure 12 un film antivibratoire 28.

Dans le mode de réalisation de la figure 5, on donne à l'extrémité 18 du corps principal 10 de l'aube une forme en double coin 26, 26', la fente 16' de la plateforme 12 ayant alors une forme complémentaire en double coin. Là encore un film antivibratoire 28, 28' peut être interposé entre l'extrémité du corps de l'aube et la plateforme de fixation.

Dans une aube suivant l'invention, c'est seulement à l'extrémité extérieure 18 du corps principal 10 qu'on donne la surépaisseur en forme de coin ou de double coin puisque c'est seulement dans le sens radial de la flèche F ou F' qu'il y a un risque d'échappement de l'aube. Pour monter les trois parties de l'aube, on enfile tout d'abord la plateforme 12 par l'extrémité inférieure 26 du corps de l'aube, puis on fait coulisser la plateforme vers l'extrémité 18 et on effectue le collage. La plateforme intérieure 14, qui n'a pas de rôle dans la fixation de l'aube, présente une fente à section constante et est simplement fixée par collage sur l'extrémité intérieure 26 du corps de l'aube.

1

## REVENDICATIONS

1. Aube fixe pour réacteurs qui comprend : un corps principal en matériau composite ; une plateforme extérieure, en matière plastique moulée, de fixation de l'aube sur le carter du réacteur, ladite plateforme présentant une fente dans laquelle est enfoncée et collée l'extrémité extérieure du corps principal pour solidariser ladite plateforme avec ledit corps principal ; et une plateforme intérieure de raidissage de l'aube, en matière moulée, présentant une fente dans laquelle est enfoncée et collée l'extrémité intérieure libre du corps principal, ladite aube étant caractérisée : en ce que l'extrémité extérieure (18) du corps principal (10) présente, en section transversale, une forme de coin (26), la partie la plus épaisse dudit coin étant située au bord extrême dudit corps principal ; et en ce que ladite fente (16') de la plateforme extérieure (12) présente une forme complémentaire de coin, grâce à quoi le corps principal (10) est bloqué par effet de coin dans la plateforme extérieure (12) sans pouvoir s'en échapper en direction radiale vers l'intérieur.

2. Aube fixe suivant la revendication 1, caractérisée en ce que l'extrémité extérieure (18) du corps principal (10) est en forme de double coin (26, 26'), la fente de la plateforme extérieure (12) ayant une forme complémentaire en double coin.

3. Aube fixe suivant l'une des revendications 1 ou 2, caractérisée en ce qu'un film antivibratoire (28, 28') est interposé entre l'extrémité (18) en forme de coin du corps principal (10) de l'aube et la fente (16') de la plateforme extérieure (12).

1 / 2

0171329

FIG.1

FIG.2

0171329

FIG. 3

FIG. 4

FIG. 5

**Office européen des brevets**

**RAPPORT DE RECHERCHE EUROPEENNE**

EP 85 40 1546

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 857 093 (WARNKEN) <br> * Colonne 2, lignes 13-21,31-43; figures 3,4,8 * | 1-3 | F 01 D 9/04 <br> F 01 D 5/14 |
| Y | GB-A-2 115 883 (GENERAL ELECTRIC) <br> * Page 2, lignes 21-53; page 3, lignes 96-110; page 4, lignes 19-24,35-46; page 5, lignes 49-51; figure 2 * | 1-3 | |

--- 

----- 

| | | | DOMAINES TECHNIQUES RECHERCHES (Int. Cl.4) |
|---|---|---|---|
| | | | F 01 D <br> F 04 D |

Le présent rapport de recherche a été établi pour toutes les revendications

| Lieu de la recherche | Date d'achèvement de la recherche | Examinateur |
|---|---|---|
| LA HAYE | 04-10-1985 | ATTASIO R.M. |